# EUROPÄISCHE PATENTSCHRIFT

(11) **EP 4 286 090 B1**
(45) Veröffentlichungstag und Bekanntmachung des Hinweises auf die Patenterteilung: **26.03.2025**
(21) Anmeldenummer: 23176626.2
(22) Anmeldetag: 01.06.2023
(51) Int. Cl.: B23Q 1/00

(54) **FLACHBAUENDE SPANNVORRICHTUNG**
FLAT-CONSTRUCTION CLAMPING DEVICE
DISPOSITIF DE SERRAGE À CONSTRUCTION PLATE

(30) Priorität: 01.06.2022 DE 102022113844
(43) Veröffentlichungstag der Anmeldung: 06.12.2023
(73) Patentinhaber: Heinz-Dieter Schunk GmbH & Co. Spanntechnik KG, 88512 Mengen (DE)
(72) Erfinder: Schräder, Philipp, 88512 Mengen-Blochingen (DE); Rieger, Manuel, 72514 Inzigkofen (DE)
(74) Vertreter: DREISS Patentanwälte PartG mbB

(56) Entgegenhaltungen:
- EP-A1- 3 871 830
- DE-B3- 102017 114 150

## Beschreibung

Die Erfindung betrifft ein Spannsystem, insbesondere ein Nullpunktspannsystem, mit einem Gehäuse, mit einer im Gehäuse entlang einer Spannachse angeordneten Spannaufnahme zur Aufnahme eines Spannbolzens, mit wenigstens einem im Gehäuse angeordneten und radial bzw. senkrecht zur Spannachse entlang einer Verriegelungsachse zwischen einer Verriegelungslage und einer Freigabelage geführt verlagerbaren Verriegelungskörper, insbesondere Spannschieber, und mit einem den Verrieglungskörper, insbesondere den wenigstens einen Spannschieber, betätigendes Stellglied.

Derartige Spannsysteme, die insbesondere als Nullpunktspannsysteme bezeichnet werden, sind in vielfältiger Art und Weise vorbekannt. Bei derartigen Spannsystemen, wie sie beispielsweise aus der EP 1 886 751 B1 vorbekannt sind, ist der Spannbolzen in die Spannaufnahme einführbar und die Verrieglungskörper in radialer Richtung in eine Verriegelungslage insbesondere derart verlagerbar, dass sie in einer radial inneren Verriegelungslage gegen den in der Spannaufnahme vorhandenen Spannbolzen wirken und zudem das Trägerteil in axialer Richtung gegen das Spannmodul beaufschlagt wird. In der radial äußeren Freigabelage kann der Spannbolzen aus der Aufnahme entnommen werden.

Die DE 10 2017 114150 B3 offenbart ein Spannsystem, auf dem der Oberbegriff des beiliegenden Anspruchs 1 basiert. Die EP 3 871 830 A1 offenbart ebenfalls ein solches Spannsystem.

Der Erfindung liegt die Aufgabe zugrunde, ein Spannsystem bereitzustellen, das eine hohe Flexibilität aufweist und vorzugsweise zudem flach baut.

Diese Aufgabe wird durch ein Spannsystem mit den Merkmalen des Anspruchs 1 gelöst. Demnach ist am oder im wenigstens einen Spannschieber oder am oder im wenigstens einen Stellglied wenigstens ein Führungselement lösbar angeordnet. Das Führungselement weist eine Führungsnut zur Bewegungskopplung des wenigstens einen Spannschiebers und des wenigstens einen Stellglieds auf. Die Führungsnut dient zur Umwandlung einer Bewegung des Stellglieds parallel zur Spannachse in eine Bewegung des wenigstens einen Spannschiebers parallel zur Verriegelungsachse. Demnach ist der Spannschieber modular aufgebaut, sodass eine Vielzahl von Führungselementen an einem Spannschieber Verwendung finden kann. Bei einem Schaden an der Führungsnut ist es nicht erforderlich, den gesamten Spannschieber auszutauschen, sondern es ist nur der Austausch des Führungselements erforderlich. Ferner erlaubt die lösbare Anordnung des Führungselements am Spannschieber einen Austausch, sodass unterschiedliche Bewegungskinematiken innerhalb eines Spannsystems realisierbar sind. Somit kann je nach Spannaufgabe der Eilhub und der Krafthub gezielt eingestellt werden.

Es ist vorteilhaft, wenn das Führungselement derart am oder im wenigstens einen Spannschieber angeordnet ist, dass im montierten Zustand das Führungselement einen parallel zur Spannachse erstreckenden Erweiterungsabschnitt am Spannschieber bildet. Demnach weist der Spannschieber in Verbindung mit dem Führungselement den Erweiterungsabschnitt und einen Spannabschnitt auf, welcher unter anderem die Kontaktfläche zwischen dem Spannschieber und dem Spannbolzen umfasst. Das Führungselement erstreckt sich vorzugsweise in den Spannabschnitt und den Erweiterungsabschnitt. Dabei steht das Führungselement parallel zur Spannachse gegenüber dem Spannschieber und dem Spannabschnitt hervor. Folglich kann die im Führungselement vorgesehene Führungsnut verlängert werden, ohne dass der Bauraum für den Spannschieber wesentlich vergrößert werden muss.

Vorteilhafterweise weist der Spannschieber eine parallel zur Spannachse verlaufende Schieberhöhe und der Erweiterungsabschnitt eine parallel zur Spannachse verlaufende Erweiterungshöhe auf. Das Verhältnis zwischen Erweiterungshöhe und Schieberhöhe liegt vorzugsweise in einem Bereich zwischen 1:10 und 2:1, insbesondere in einem Bereich zwischen 1:8 und 1:1, vorzugsweise in einem Bereich zwischen 1:5 und 1:3, und bevorzugt bei 1:4. Aus einem derartigen Verhältnis ergibt sich eine optimale Balance aus Bauhöhe des Spannsystems und Einstellbarkeit eines Eilhubs bzw. einer Kraftverstärkung.

Eine vorteilhafte Ausführungsform sieht vor, dass das Gehäuse ein Gehäuseoberteil und ein Gehäuseunterteil aufweist. Der äußere Durchmesser des Gehäuseoberteils ist vorzugsweise größer als der äußere Durchmesser des Gehäuseunterteils, insbesondere liegt das Verhältnis zwischen Gehäuseoberteil und Gehäuseunterteil in einem Bereich zwischen 2:1 und 1,1:1, bevorzugt bei 1,2:1. Ferner ist der Spannabschnitt zumindest im Wesentlichen im Gehäuseoberteil und/oder der Erweiterungsabschnitt zumindest im Wesentlichen im Gehäuseunterteil angeordnet. Demnach ist das Führungselement derart am Spannschieber angeordnet, dass das Führungselement in der Verriegelungslage und in der Freigabelage, somit auch in der radialen Außenlage, nicht über den äußeren Durchmesser des Gehäuseunterteils hinausgeht. Folglich kann das Gehäuseoberteil flach bauen, da sich der Erweiterungsabschnitt nur im Gehäuseunterteil erstreckt. Ferner kann das Gehäuseunterteil schmaler bauen, da nur das Führungselement und nicht der gesamte Spannschieber mit einer größeren radialen Erstreckung im Gehäuseunterteil angeordnet ist. Das Führungselement erstreckt sich sowohl in das Gehäuseoberteil als auch in das Gehäuseunterteil.

Vorteilhafterweise weist der Spannschieber eine senkrecht zur Verriegelungsachse und senkrecht zur Spannachse erstreckende Ausnehmung zur Aufnahme des Führungselements auf. Folglich kann das Führungselement sicher und positionsgenau am Spannschieber angeordnet werden. Vorzugsweise weist der Spannschieber wenigstens eine Bohrung mit einem Innengewinde und das Führungselement wenigstens eine Durchgangsbohrung auf, wobei eine Schraube durch die wenigstens eine Durchgangsbohrung geführt werden kann und mit dem Innengewinde derart zusammenwirkt, dass das Führungselement an dem Spannschieber lösbar befestigbar ist.

Der Spannschieber weist vorzugsweise zur Spannachse eine radiale Erstreckung mit einer Schieberlänge auf, wobei der Spannschieber eine der Spannachse zugewandte Schieberinnenseite und eine der Schieberinnenseite gegenüberliegende und der Spannachse abgewandte Schieberaußenseite aufweist. Ferner weist vorzugsweise das Führungselement eine zur Spannachse radiale Erstreckung mit einer Elementlänge auf, wobei das Führungselement eine der Spannachse zugewandte Elementinnenseite und eine der Elementinnenseite gegenüberliegende und der Spannachse abgewandte Elementaußenseite aufweist. Dabei ist das Führungselement vorzugsweise zwischen der Schieberinnenseite und der Schieberaußenseite angeordnet, wobei das Führungselement einen ersten Abstand zur Schieberinnenseite und einen zweiten Abstand zur Schieberaußenseite aufweist. Vorteilhafterweise ist der erste Abstand kleiner als der zweite Abstand. Je größer der Unterschied zwischen erstem Abstand und zweitem Abstand ist, desto kleiner kann das Gehäuseunterteil gegenüber dem Gehäuseoberteil ausgebildet sein. Das Verhältnis zwischen erstem Abstand und zweitem Abstand ist insbesondere in einem Bereich zwischen 1:1 und 1:5, vorteilhafterweise in einem Bereich zwischen 1:1,1 und 1:2 und bevorzugt bei 1:1,5. Zudem ist es vorteilhaft, wenn das Verhältnis zwischen Schieberlänge und Elementlänge in einem Bereich zwischen 5:1 und 2:1 liegt und vorzugsweise in einem Bereich zwischen 3:1 und 2:1 liegt und bevorzugt bei 2,5: 1 liegt. Ferner ist es vorteilhaft, wenn das Verhältnis zwischen zweitem Abstand und Elementlänge insbesondere in einem Bereich zwischen 2:1 und 1:5, vorteilhafterweise in einem Bereich zwischen 1:1 und 1:3 und bevorzugt bei 1:1,5 liegt. Vorzugsweise weist der Spannschieber zudem eine senkrecht zur Spannachse und senkrecht zur Verriegelungsachse verlaufende Schieberbreite auf. Die Ausnehmung des Spannschiebers erstreckt sich vorzugsweise über die gesamte Schieberbreite. Es ist zudem vorteilhaft, wenn sich das Führungselement und/oder die Führungsnut im montierten Zustand über die gesamte Schieberbreite erstreckt.

Eine vorteilhafte Ausführungsform sieht vor, dass der wenigstens eine Spannschieber entlang der Verriegelungsachse im Querschnitt eine im Wesentlichen ovale Außenkontur aufweist, welche insbesondere durch eine senkrecht zur Spannachse verlaufende Oberseite und eine gegenüber der Oberseite senkrecht zur Spannachse verlaufende Unterseite und zwei sich gegenüberliegenden im Wesentlichen halbkreisförmig ausgebildeten Seiten begrenzt wird. Vorteilhafterweise weist der wenigstens eine Spannschieber an den im Wesentlichen halbkreisförmig ausgebildeten Seiten gerade, also parallel zur Spannachse verlaufende, Abschnitte auf, wobei die Abschnitte eine Höhe zwischen 0,1 mm und 2 mm, insbesondere von 0,5 mm, aufweisen. Demnach kann das Spannsystem den Spannbolzen sicher spannen und gleichzeitig besonders flach bauen.

Es ist ferner vorteilhaft, wenn die Führungsnut derart gebogen ausgebildet ist, dass beim Verlagern des Spannschiebers aus der Freigabelage in die Verriegelungslage ein Eilhub und in der Verriegelungslage eine Kraftverstärkung erreicht wird. Dabei weist die Führungsnut an der Unterseite des Führungselements einen ersten Führungsabschnitt mit einer ersten Steigung und oberhalb und an den ersten Führungsabschnitt anschließend einen zweiten Führungsabschnitt mit einer zweiten Steigung auf, wobei die zweite Steigung vorzugsweise größer als die erste Steigung ist. Die Steigung ergibt sich aus dem Winkel des Führungsabschnitts gegenüber der Spannachse.

Zur Betätigung des Spannschiebers kann das wenigstens eine Stellglied parallel zur Spannachse zwischen einer Neutralstellung und einer Betätigungsstellung verlagert werden.

Es ist vorteilhaft, wenn das wenigstens eine Stellglied mit wenigstens einem parallel zur Spannachse verlagerbaren Stellring zusammenwirkt, wobei der Stellring einen Druckraum begrenzt, der zur axialen Verlagerung des Stellrings und/oder des Stellglieds pneumatisch oder hydraulisch druckbeaufschlagbar ist.

Vorteilhafterweise ist das wenigstens eine Stellglied und/oder der wenigstens eine Stellring derart federbeaufschlagt, dass das Stellglied in die Neutralstellung oder in die Betätigungsstellung und/oder der Spannschieber in die Freigabelage oder in die Verriegelungslage gedrängt wird.

Eine weitere vorteilhafte Ausführungsform sieht vor, dass das wenigstens eine Stellglied als wenigstens ein Betätigungsbolzen oder als wenigstens ein Betätigungsnocken ausgebildet ist. Ein Betätigungsbolzen erstreckt sich vorzugsweise über die gesamte Schieberbreite und darüber hinaus. Ein Betätigungsnocken greift in die Führungsnut ein, erstreckt sich jedoch nicht über die gesamte Schieberbreite. Es ist denkbar, dass je Seite des Spannschiebers ein Betätigungsnocken in eine Führungsnut eingreift, wobei vorzugsweise die Bewegung der Betätigungsnocken synchronisiert ist.

Es ist vorteilhaft, wenn das wenigstens eine Stellglied an oder in einem Stellring angeordnet ist. Es ist zudem vorteilhaft, wenn wenigstens zwei Stellglieder vorgesehen sind, welche am oder im Stellring angeordnet sind. Demnach ist eine synchrone Betätigung mehrerer Spannschieber durch mehrere an oder in dem Stellring angeordneter Stellglieder gewährleistet. Der Stellring kann mit einem Stellkolben zum Verlagern der Stellglieder zusammenwirken, wobei eine parallel zur Spannachse verlaufende Verlagerung des Stellkolbens zu einer parallel zur Spannachse verlaufende Verlagerung des Stellrings und damit des wenigstens einen Stellglieds führt.

Vorteilhafterweise drängt das wenigstens eine Stellglied in der Neutralstellung den wenigstens einen Spannschieber in die Freigabelage. Vorteilhafterweise drängt das wenigstens eine Stellglied in der Betätigungslage den wenigstens einen Spannschieber in die Verriegelungslage. Bei einer alternativen Ausführungsform kann die Verriegelungslage auch radial außen und die Freigabelage radial innen vorgesehen sein.

Eine vorteilhafte Ausführungsform sieht vor, dass am Gehäuse und/oder am Spannschieber Dichtelemente zur Abdichtung des Gehäuses und/oder des Spannschiebers angeordnet sind. Vorzugsweise sind die Dichtelemente als O-Ringe ausgebildet, wobei ein erster O-Ring innen und ein zweiter O-Ring angeordnet ist.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine perspektivische Ansicht eines erfindungsgemäßen Spannsystems;
- Figur 2: eine Seitenansicht des Spannsystems gemäß Fig. 1 mit einem Schnitt durch einen Spannschieber in der Freigabelage;
- Figur 3: eine Seitenansicht des Spannsystems gemäß Fig. 1 mit einem Schnitt durch einen Spannschieber in der Verriegelungslage;
- Figur 4: eine perspektivische Ansicht des Spannschiebers des Spannsystems gemäß Fig. 1;
- Figur 5: eine Explosionsansicht des Spannschiebers gemäß Fig. 4; und
- Figur 6: eine Seitenansicht des Spannschiebers gemäß Fig. 4 mit einem Schnitt durch das Führungselement.

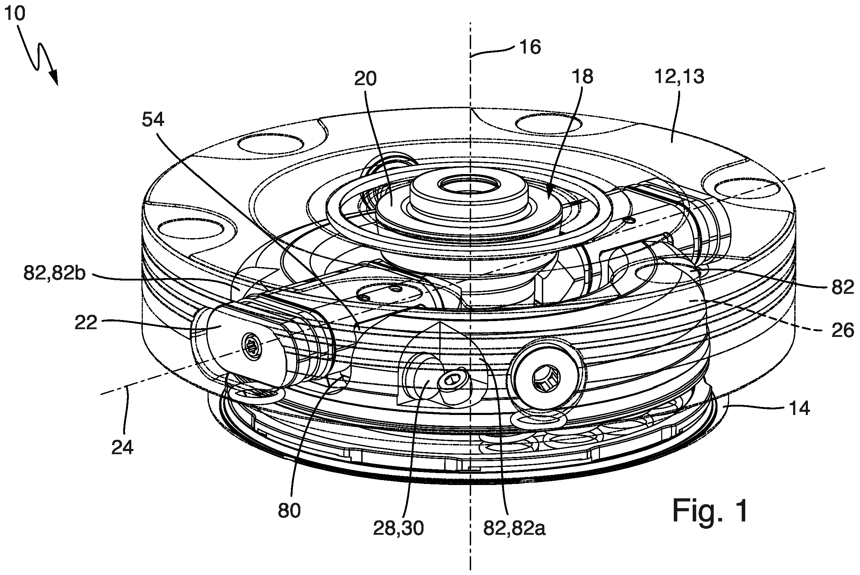

In Fig. 1 ist ein Nullpunktspannmodul 10 mit einem Gehäuse 12 umfassend ein Gehäuseoberteil 13 und ein Gehäuseunterteil 14, und mit einer im Gehäuse 12 vorgesehenen und entlang einer Spannachse 16 erstreckenden Spannaufnahme 18 zur Aufnahme eines Spannbolzens 20 gezeigt. Der Spannbolzen 20 wird im Betrieb des Nullpunktspannmoduls 10 an ein zu spannendes Bauteil, z.B. ein Spannmodul, eine Spannpalette oder unmittelbar an ein zu bearbeitendes Werkstück, angeordnet.

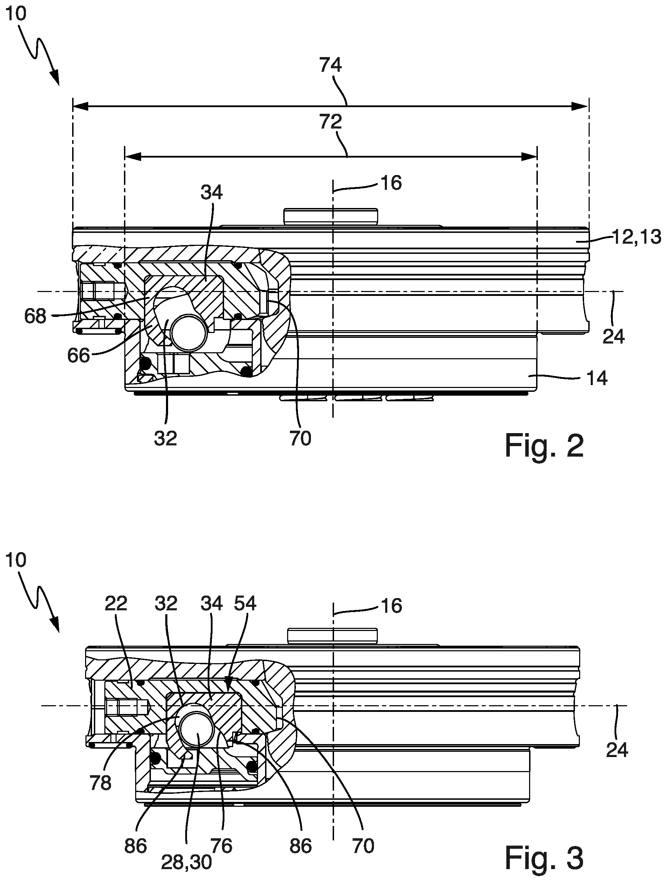

Im Gehäuse 12 sind gemäß Fig. 2 und 3 hin zur Spannachse 16 verlagerbare Spannschieber 22 vorgesehen, welche entlang einer Verriegelungsachse 24 zwischen einer radial äußeren Freigabelage gemäß Fig. 2 und einer radial inneren Verriegelungslage gemäß Fig. 3 verlagerbar sind. Zur Abdichtung des Gehäuses 12 sind am Gehäuse 12 und/oder am Spannschieber 22 Dichtelemente 23 in Form von O-Ringen vorgesehen, wobei die Dichtelemente 23 vorzugsweise in parallel zur Spannachse 16 verlaufende Ringausnehmungen 25 am Gehäuse 12 und/oder am Spannschieber 22 angeordnet sind.

Bei einer alternativen Ausführungsform wird von der Spannaufnahme 18 nicht ein Spanbolzen 20, sondern ein Spannring (nicht gezeigt) aufgenommen, wobei sich dann die Spannschieber 22 in der Verriegelungsalge nicht in einer radial inneren, sondern in einer radial äußeren Lage befinden. In der Verriegelungslage wird der Spannbolzen 20 durch die Spannschieber 22 in die Spannaufnahme 18 gezogen und dort verriegelt.

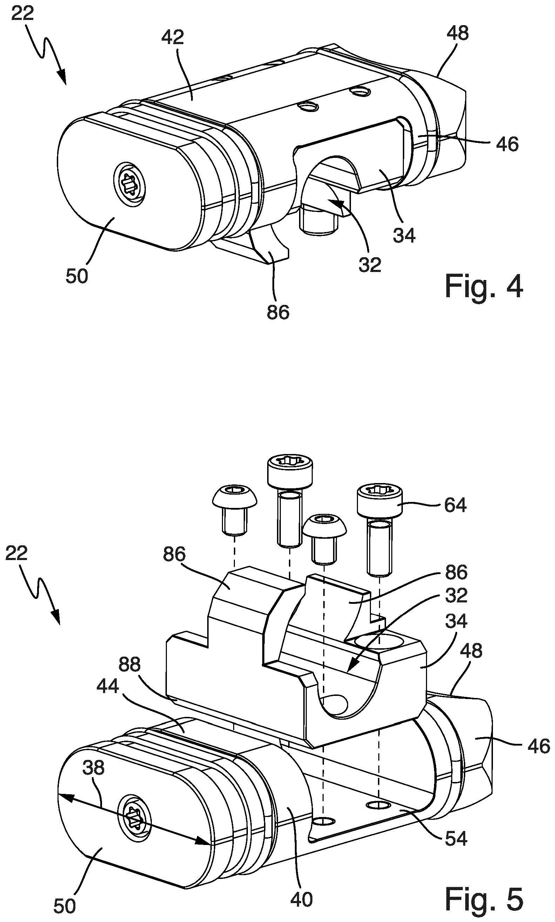

Zur Verlagerung der Spannschieber 22 ist ein druckbeaufschlagbarer Stellring 26 vorgesehen, welcher mit den Spannschiebern 22 zusammenwirkt. Bei einer axialen Verlagerung, parallel zur Spannaufnahme 18, des Stellrings 26 erfolgt eine radiale Verlagerung, parallel zur Verriegelungsachse 24, der Spannschieber 22. Der Stellring 26 wirkt bei der axialen Verlagerung gegen einen Stellring 26. Der Stellring 26 umfasst gemäß Fig. 1 zwei Stellglieder 28, welche jeweils als Betätigungsbolzen 30 ausgebildet sind. Die Betätigungsbolzen 30 greifen jeweils in eine Führungsnut 32 eines Führungselements 34 ein. Das Führungselement 34 ist gemäß Fig. 5 jeweils an einem Spannschieber 22 lösbar angeordnet. Die Kombination des Betätigungsbolzens 30 und der Führungsnut 32 bestimmen die Bewegungskinematik bzw. die Übersetzung der axialen Verlagerung des Stellrings 26 und der radialen Verlagerung der Spannschieber 22. Die Stellglieder 28 sind parallel zur Spannachse 16 in eine Neutralstellung und eine Betätigungsstellung verlagerbar, wobei in der Betätigungsstellung die Stellglieder 28 die Spannschieber 22 in die Verriegelungslage und in der Neutralstellung die Stellglieder die Spannschieber 22 in die Freigabelage drängen. Ferner sind gemäß Fig. 1 im Gehäuse 12 Federmittel 27 vorgesehen, die die Stellglieder 28 in die Betätigungsstellung drängen. Die Federmittel 27 wirken vorzugsweise parallel zur Spannachse 16. Demnach kann auch bei einem Ausfall der Energiezufuhr des Spannmoduls 10 eine Verriegelungslage der Spannschieber 22 aufrechterhalten werden.

In den Fig. 4 bis 6 ist ein Spannschieber 22 im nicht montierten Zustand gezeigt. Der Spannschieber 22 weist gemäß Fig. 5 eine parallel zur Spannachse 16 verlaufende Schieberhöhe 36 und eine parallel zur Verriegelungsachse 24 verlaufende Schieberbreite 38 auf. Ferner weist der Spannschieber 22 entlang der Verriegelungsachse 24 im Querschnitt eine im Wesentlichen ovale Außenkontur 40 auf.

Die Außenkontur 40 wird insbesondere durch eine senkrecht zur Spannachse 16 verlaufende Oberseite 42 und eine gegenüber der Oberseite 42 senkrecht zur Spannachse 16 verlaufende Unterseite 44 und zwei sich gegenüberliegenden im Wesentlichen halbkreisförmig ausgebildeten Seiten 46 begrenzt, wobei die Seiten 46 parallel zur Spannachse 16 verlaufende Abschnitte 47 aufweisen, wobei die Abschnitte eine Höhe von 0,5 mm aufweisen. Zudem weist der Spannschieber 22 eine der Spannachse 16 zugewandte Schieberinnenseite 48 und eine der Spannachse 16 abgewandte Schieberaußenseite 50 auf, wobei sich eine Schieberlänge 52 zwischen der Schieberinnenseite 48 und der Schieberaußenseite 50 erstreckt.

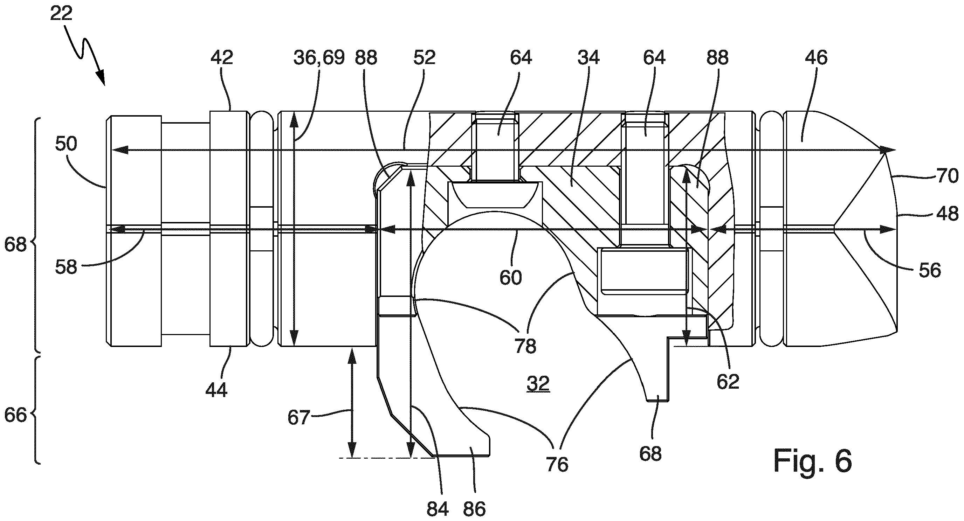

Nach Fig. 5 und 6 ist im Spannschieber 22 eine senkrecht zur Spannachse 16 und senkrecht zur Verriegelungsachse 24 verlaufende Ausnehmung 54 vorgesehen, welche zwischen der Schieberinnenseite 48 und der Schieberaußenseite 50 angeordnet ist. Die Ausnehmung 54 weist zur Schieberinnenseite 48 einen ersten Abstand 56 und zur Schieberaußenseite 50 einen zweiten Abstand 58 sowie eine parallel zur Verriegelungsachse 24 verlaufende Ausnehmungslänge 60 auf. Das Verhältnis zwischen der Schieberlänge 52 und der Ausnehmungslänge 60 liegt insbesondere in einem Bereich zwischen 5:1 und 1,2:1 und bevorzugt bei 1,5:1. Das Verhältnis zwischen der Schieberlänge 52 und dem ersten Abstand 56 liegt insbesondere in einem Bereich zwischen 10:1 und 3:1 und bevorzugt bei 5:1. Das Verhältnis zwischen der Schieberlänge 52 und dem zweiten Abstand 58 liegt insbesondere in einem Bereich zwischen 5:1 und 1,5:1 und bevorzugt bei 3:1. Die Ausnehmungslänge 60 entspricht zumindest im Wesentlichen einer parallel zur Verriegelungsachse 24 verlaufenden Elementlänge eines in der Ausnehmung 54 angeordneten Führungselements 34.

Ferner weist die Ausnehmung 54 eine parallel zur Spannachse 16 verlaufende Ausnehmungstiefe 62 auf, wobei das Verhältnis zwischen Schieberhöhe 36 und Ausnehmungstiefe 62 insbesondere in einem Bereich zwischen 10:1 und 1,2:1 liegt und bevorzugt bei 1,5:1 liegt.

Die Ausnehmung 54 dient zur Anordnung des Führungselements 34 an dem Spannschieber 22. Dazu wird das Führungselement 34 in der Ausnehmung 54 angeordnet und mittels Befestigungsmittel 64 in Form von Schrauben an dem Spannschieber 22 lösbar befestigt. Andere lösbare Verbindungen zwischen den Spannschiebern 22 und den Führungselementen 34, z.B. wenigstens ein Zylinderstift mit schräger Stirnseite, sind ebenfalls denkbar. Folglich können an dem Spannschieber 22 unterschiedliche Führungselement 34 und damit auch Führungsnuten 32 vorgesehen werden. Demnach muss bei einem Schaden an der Führungsnut 32 nicht der gesamte Spannschieber 22 ausgetauscht werden, sondern ein Austausch des Führungselements 34 genügt. Zudem kann eine andere Bewegungskinematik an einem Nullpunktspannmodul 10 je nach Spannaufgabe vorgesehen werden. Außerdem ist es möglich in einem Nullpunktspannmodul 10 bei zwei Spannschiebern 22 zwei unterschiedliche Bewegungskinematiken vorzusehen.

Das Führungselement 34 steht nach Fig. 6 gegenüber der Unterseite 44 des Spannschiebers 22 hervor. Durch die Anordnung des Führungselements 34 am Spannschieber 22 wird ein parallel zur Spannachse 16 erstreckender Erweiterungsabschnitt 66 gebildet, welcher sich an einen Spannabschnitt 68 anschließt, der unter anderem die Kontaktfläche 70 zwischen dem Spannschieber 22 und dem Spannbolzen 18 umfasst. Der Erweiterungsabschnitt 66 weist eine parallel zur Spannachse 16 verlaufende Erweiterungshöhe 67 auf. Der Spannabschnitt 68 weist eine parallel zur Spannachse 16 verlaufende Spannhöhe 69 auf. Der Spannschieber 22 ist dabei nur innerhalb des Spannabschnitts 68 vorgesehen, wobei das Führungselement 34 sowohl im Spannabschnitt 68 als auch im Erweiterungsabschnitt 66 vorgesehen ist. Folglich kann die im Führungselement 34 vorgesehene Führungsnut 32 verlängert werden, ohne dass der Bauraum für den Spannschieber 22 wesentlich vergrößert werden muss.

Nach Fig. 2 und 3 kann der Spannschieber 22 derart im Gehäuse 12 und/oder das Führungselement 35 derart am Spannschieber 22 angeordnet sein, dass der Erweiterungsabschnitt 66 nur im Gehäuseunterteil 14 vorgesehen ist. Folglich kann das Gehäuseunterteil 14 mit einem ersten Durchmesser 72 kleiner als das Gehäuseoberteil 13 mit einem zweiten Durchmesser 74 ausgebildet sein. Zudem kann das Nullpunktspannmodul 10 flacher bauen, da der Erweiterungsabschnitt 66 nur im Gehäuseunterteil 14 angeordnet ist.

Nach Fig. 6 ist die Führungsnut 32 des Führungselements 34 bogenförmig mit einem ersten Führungsabschnitt 76 an der Unterseite des Führungselements 34 und einem an den ersten Führungsabschnitt 76 anschließenden zweiten Führungsabschnitt 78 ausgebildet. Der erste Führungsabschnitt 76 weist gegenüber der Spannachse 16 eine erste Steigung und der zweite Führungsabschnitt 78 eine zweite Steigung auf. Die Steigung des ersten Führungsabschnitts 76 ist dabei kleiner als die Steigung des zweiten Führungsabschnitts 78. Demnach ist das Stellglied 22 in der Neutralstellung mit dem ersten Führungsabschnitt 76 im Eingriff. Eine axiale Verlagerung des Stellglieds 28 führt zu einer radialen Verlagerung des Spannschiebers 22, wobei im ersten Führungsabschnitt 76 eine hohe Übersetzung vorliegt, sodass der Spannschieber 22 im Eilgang verlagert wird. Mit Voranschreiten der Verlagerung liegt das Stellglied 28 im zweiten Führungsabschnitt 78 an, wobei durch die größere Steigung eine Kraftverstärkung realisiert wird. Folglich kann eine schnelle und gleichzeitig sichere Einspannung des Spannbolzens 20 gewährleistet werden.

Das Führungselement 34 weist eine parallel zur Spannachse 16 verlaufende Führungshöhe 84, wobei diese größer als die Ausnehmungstiefe 62 ausgebildet ist. Ferner weist das Führungselement 34 wenigstens eine Einführlippe 86 zum leichteren Einführen des Stellglieds 34 in die Führungsnut 32 auf. Zudem weist das Führungselement 34 an der dem Spannschieber 22 zugewandten Seite wenigstens eine Fase 88 zum leichteren Einführen des Führungselements 34 in die Ausnehmung 54 auf.

Zur Übersetzung der Verlagerung greifen die Stellglieder 28 in die Führungsnut 32 ein. Unter anderem für den Fall, dass die Spannschieber 22 synchron verlagert werden sollen, sind die die Spannschieber 22 betätigenden Stellglieder 28 in dem Stellring 26 angeordnet. Der Stellring 26 ist gemäß Fig. 1 ringförmig ausgebildet und weist Ausnehmungen 80 zur Aufnahme der Spannschieber 22 auf. Ferner sind neben den Ausnehmungen 80 Aussparungen 82 vorgesehen, wobei durch die Aussparungen 82 die Stellglieder 28 am Stellring 26 montierbar sind. Die Stellglieder 28 sind derart am Stellring 26 montiert, dass diese sich zwischen einer ersten Aussparung 82a und einer weiteren Aussparung 82b erstrecken und in der Ausnehmung 80 angeordnet sind.

## Patentansprüche

1. Spannsystem (10), insbesondere Nullpunktspannmodul, mit einem Gehäuse (12), mit einer im Gehäuse (12) entlang einer Spannachse (16) angeordneten Spannaufnahme (18) zur Aufnahme eines Spannbolzens (20), mit wenigstens einem im Gehäuse (12) angeordneten und senkrecht zur Spannachse (16) entlang einer Verriegelungsachse (24) zwischen einer Verriegelungslage und einer Freigabelage verlagerbaren Spannschieber (22), mit wenigstens einem den wenigstens einen Spannschieber (22) betätigenden und parallel zur Spannachse (16) verlagerbaren Stellglied (28), **dadurch gekennzeichnet, dass** am oder im wenigstens einen Spannschieber (22) oder am oder im wenigstens einen Stellglied (28) wenigstens ein Führungselement (34) lösbar angeordnet ist, dass das Führungselement (34) eine Führungsnut (32) zur Bewegungskopplung des wenigstens einen Spannschiebers (22) und des wenigstens einen Stellglieds (28) aufweist.

2. Spannsystem nach Anspruch 1, wobei das Führungselement (34) derart am oder im wenigstens einen Spannschieber (22) angeordnet ist, dass das Führungselement (34) einen parallel zur Spannachse (16) erstreckenden Erweiterungsabschnitt am Spannschieber (22) bildet.

3. Spannsystem (10) nach Anspruch 2, wobei der Spannschieber (22) einen Spannabschnitt (68) mit einer parallel zur Spannachse (16) verlaufenden Schieberhöhe (36) und der Erweiterungsabschnitt (66) eine parallel zur Spannachse (16) verlaufende Erweiterungshöhe (67) aufweist, und wobei das Verhältnis zwischen Erweiterungshöhe (67) und Schieberhöhe (36) in einem Bereich zwischen 1:10 und 2:1, insbesondere in einem Bereich zwischen 1:8 und 1:1, vorzugsweise in einem Bereich zwischen 1:5 und 1:3, bevorzugt bei 1:4 liegt.

4. Spannsystem (10) nach Anspruch 2 oder 3, wobei das Gehäuse (12) ein Gehäuseoberteil (13) und ein Gehäuseunterteil (14) aufweist, wobei der Spannabschnitt (68) im Gehäuseoberteil (13) angeordnet ist, und wobei der Erweiterungsabschnitt (66) zumindest im Wesentlichen im Gehäuseunterteil (14) angeordnet ist.

5. Spannsystem (10) nach einem der Ansprüche 2 bis 4, wobei der Spannschieber (22) eine senkrecht zur Verriegelungsachse (24) und senkrecht zur Spannachse (16) erstreckende Ausnehmung (54) zur Aufnahme des Führungselements (34) aufweist.

6. Spannsystem (10) nach einem der vorherigen Ansprüche, wobei der wenigstens eine Spannschieber (22) entlang der Verriegelungsachse (24) im Querschnitt eine im Wesentlichen ovale Außenkontur (40) aufweist, welche insbesondere durch eine senkrecht zur Spannachse (16) verlaufende Oberseite (42) und eine gegenüber der Oberseite (42) senkrecht zur Spannachse (16) verlaufende Unterseite (44) und zwei sich gegenüberliegenden im Wesentlichen halbkreisförmig ausgebildeten Seiten (46) begrenzt wird.

7. Spannsystem (10) nach einem der vorherigen Ansprüche, wobei die Führungsnut (34) derart gebogen ausgebildet ist, dass beim Verlagern des Spannschiebers (22) aus der Freigabelage in die Verriegelungslage ein Eilhub und in der Verriegelungslage eine Kraftverstärkung erreicht wird.

8. Spannsystem (10) nach einem der vorherigen Ansprüche, wobei das wenigstens eine Stellglied (28) parallel zur Spannachse (16) zwischen einer Neutralstellung und Betätigungsstellung verlagerbar ist.

9. Spannsystem (10) nach einem der vorherigen Ansprüche, wobei das wenigstens eine Stellglied (28) mit wenigstens einem parallel zur Spannachse (16) verlagerbaren Stellring (26) zusammenwirkt, wobei der Stellring (26) einen Druckraum begrenzt, der zur axialen Verlagerung des Stellrings (26) und/oder des Stellglieds (28) pneumatisch oder hydraulisch druckbeaufschlagbar ist.

10. Spannsystem (10) nach einem der vorherigen Ansprüche, wobei das wenigstens eine Stellglied (28) und/oder der wenigstens eine Stellring (26) derart federbeaufschlagt ist, dass das Stellglied (28) in die Betätigungsstellung und der Spannschieber (22) in die Verriegelungslage gedrängt wird.

11. Spannsystem (10) nach einem der vorherigen Ansprüche, wobei das wenigstens eine Stellglied (28) als wenigstens ein Betätigungsbolzen (30) oder als wenigstens ein Betätigungsnocken (30) ausgebildet ist.

12. Spannsystem (10) nach einem der vorherigen Ansprüche, wobei das wenigstens eine Stellglied (28) an oder in einem Stellring (26) angeordnet ist.

13. Spannsystem (10) nach Anspruch 9, wobei das wenigstens eine Stellglied (28) in der Neutralstellung den wenigstens einen Spannschieber (22) in die Freigabelage drängt und/oder das wenigstens eine Stellglied (28) in der Betätigungslage den wenigstens einen Spannschieber (22) in die Verriegelungslage drängt.

14. Spannsystem (10) nach einem der vorherigen Ansprüche, wobei am Gehäuse (12) und/oder am Spannschieber (22) Dichtelemente (23) zur Abdichtung des Gehäuses (12) und/oder des Spannschiebers (22) angeordnet sind.

## Claims

1. Clamping system (10), in particular zero-point clamping module, comprising a housing (12), comprising a clamping receptacle (18), arranged in the housing (12) along a clamping axis (16), for receiving a clamping bolt (20), comprising at least one clamping slide (22) arranged in the housing (12) and movable perpendicularly to the clamping axis (16) along a locking axis (24) between a locking position and a release position, comprising at least one actuator (28) which actuates the at least one clamping slide (22) and is movable parallel to the clamping axis (16),
**characterized in that** at least one guide element (34) is detachably arranged on or in at least one clamping slide (22) or on or in at least one actuator (28), **in that** the guide element (34) has a guide groove (32) for motion coupling the at least one clamping slide (22) and the at least one actuator (28).

2. Clamping system according to claim 1, wherein the guide element (34) is arranged on or in at least one clamping slide (22) such that the guide element (34) forms an extension portion on the clamping slide (22) extending in parallel with the clamping axis (16).

3. Clamping system (10) according to claim 2, wherein the clamping slide (22) has a clamping portion (68) with a slide height (36) running in parallel with the clamping axis (16) and the extension portion (66) has an extension height (67) running in parallel with the clamping axis (16), and wherein the ratio between the extension height (67) and slide height (36) is in a range between 1:10 and 2:1, in particular in a range between 1:8 and 1:1, preferably in a range between 1:5 and 1:3, preferably 1:4.

4. Clamping system (10) according to claim 2 or claim 3, wherein the housing (12) has an upper housing part (13) and a lower housing part (14), wherein the clamping portion (68) is arranged in the upper housing part (13), and wherein the extension portion (66) is arranged at least substantially in the lower housing part (14).

5. Clamping system (10) according to any of claims 2 to 4, wherein the clamping slide (22) has a recess (54) extending perpendicularly to the locking axis (24) and perpendicularly to the clamping axis (16) for receiving the guide element (34).

6. Clamping system (10) according to any of the preceding claims, wherein the at least one clamping slide (22) has a substantially oval outer contour (40) in cross-section along the locking axis (24), which is delimited in particular by an upper face (42) running perpendicularly to the clamping axis (16) and a lower face (44) running perpendicularly to the clamping axis (16) relative to the upper face (42), and two opposing substantially semicircular faces (46).

7. Clamping system (10) according to any of the preceding claims, wherein the guide groove (34) is curved in such a way that when the clamping slide (22) is moved from the release position to the locking position, a rapid stroke is achieved and in the locking position a force amplification is achieved.

8. Clamping system (10) according to any of the preceding claims, wherein the at least one actuator (28) is movable in parallel with the clamping axis (16) between a neutral position and an actuating position.

9. Clamping system (10) according to any of the preceding claims, wherein the at least one actuator (28) interacts with at least one actuation ring (26) which can be moved in parallel with the clamping axis (16), wherein the actuation ring (26) delimits a pressure chamber which can be pressurized pneumatically or hydraulically for the axial movement of the actuation ring (26) and/or the actuator (28).

10. Clamping system (10) according to any of the preceding claims, wherein the at least one actuator (28) and/or the at least one actuation ring (26) is spring-loaded such that the actuator (28) is forced into the actuating position and the clamping slide (22) is forced into the locking position.

11. Clamping system (10) according to any of the preceding claims, wherein the at least one actuator (28) is designed as at least one actuating bolt (30) or as at least one actuating cam (30).

12. Clamping system (10) according to any of the preceding claims, wherein the at least one actuator (28) is arranged on or in an actuation ring (26).

13. Clamping system (10) according to claim 9, wherein the at least one actuator (28) in the neutral position forces the at least one clamping slide (22) into the release position and/or the at least one actuator (28) in the actuating position forces the at least one clamping slide (22) into the locking position.

14. Clamping system (10) according to any of the preceding claims, wherein sealing elements (23) for sealing the housing (12) and/or the clamping slide (22) are arranged on the housing (12) and/or on the clamping slide (22).

## Revendications

1. Système de serrage (10), en particulier module de serrage à point zéro, comportant un boîtier (12), comportant un logement de serrage (18) disposé dans le boîtier (12) le long d'un axe de serrage (16) et destiné à loger un boulon de serrage (20), comportant au moins un coulisseau de serrage (22) disposé dans le boîtier (12) et pouvant être déplacé perpendiculairement à l'axe de serrage (16) le long d'un axe de verrouillage (24) entre une position de verrouillage et une position de libération, comportant au moins un actionneur (28) actionnant l'au moins un coulisseau de serrage (22) et pouvant être déplacé parallèlement à l'axe de serrage (16), **caractérisé en ce qu'**au moins un élément de guidage (34) est disposé de manière amovible sur ou dans l'au moins un coulisseau de serrage (22) ou sur ou dans l'au moins un actionneur (28), **en ce que** l'élément de guidage (34) présente une rainure de guidage (32) pour l'accouplement de mouvements de l'au moins un coulisseau de serrage (22) et de l'au moins un actionneur (28).

2. Système de serrage selon la revendication 1, dans lequel l'élément de guidage (34) est disposé sur ou dans l'au moins un coulisseau de serrage (22) de telle sorte que l'élément de guidage (34) forme sur le coulisseau de serrage (22) une section d'extension s'étendant parallèlement à l'axe de serrage (16).

3. Système de serrage (10) selon la revendication 2, dans lequel le coulisseau de serrage (22) présente une section de serrage (68) comportant une hauteur de coulisseau (36) s'étendant parallèlement à l'axe de serrage (16) et la section d'extension (66) présente une hauteur d'extension (67) s'étendant parallèlement à l'axe de serrage (16), et dans lequel le rapport entre la hauteur d'extension (67) et la hauteur de coulisseau (36) est compris dans une plage comprise entre 1:10 et 2:1, en particulier dans une plage comprise entre 1:8 et 1:1, de préférence dans une plage comprise entre 1:5 et 1:3, de préférence est de 1:4.

4. Système de serrage (10) selon la revendication 2 ou 3, dans lequel le boîtier (12) présente une partie supérieure de boîtier (13) et une partie inférieure de boîtier (14), dans lequel la section de serrage (68) est disposée dans la partie supérieure de boîtier (13), et dans lequel la section d'extension (66) est disposée au moins sensiblement dans la partie inférieure de boîtier (14).

5. Système de serrage (10) selon l'une des revendications 2 à 4, dans lequel le coulisseau de serrage (22) présente un évidement (54) s'étendant perpendiculairement à l'axe de verrouillage (24) et perpendiculairement à l'axe de serrage (16) et destiné à loger l'élément de guidage (34).

6. Système de serrage (10) selon l'une des revendications précédentes, dans lequel l'au moins un coulisseau de serrage (22) présente en section transversale, le long de l'axe de verrouillage (24), un contour extérieur (40) sensiblement ovale, lequel contour extérieur est délimité en particulier par une face supérieure (42) s'étendant perpendiculairement à l'axe de serrage (16) et une face inférieure (44) opposée à la face supérieure (42) et s'étendant perpendiculairement à l'axe de serrage (16), et deux faces (46) opposées réalisées sous forme sensiblement semi-circulaire.

7. Système de serrage (10) selon l'une des revendications précédentes, dans lequel la rainure de guidage (34) est réalisée de manière à être incurvée de telle sorte que, lors du déplacement du coulisseau de serrage (22) de la position de libération à la position de verrouillage, une course rapide est obtenue et, dans la position de verrouillage, une amplification de force est obtenue.

8. Système de serrage (10) selon l'une des revendications précédentes, dans lequel l'au moins un actionneur (28) peut être déplacé parallèlement à l'axe de serrage (16) entre une position neutre et une position d'actionnement.

9. Système de serrage (10) selon l'une des revendications précédentes, dans lequel l'au moins un actionneur (28) coopère avec au moins une bague de réglage (26) pouvant être déplacée parallèlement à l'axe de serrage (16), dans lequel la bague de réglage (26) délimite une chambre de pression qui peut être sollicitée par une pression pneumatiquement ou hydrauliquement pour le déplacement axial de la bague de réglage (26) et/ou de l'actionneur (28).

10. Système de serrage (10) selon l'une des revendications précédentes, dans lequel l'au moins un actionneur (28) et/ou l'au moins une bague de réglage (26) sont sollicités élastiquement de telle sorte que l'actionneur (28) est poussé dans la position d'actionnement et le coulisseau de serrage (22) est poussé dans la position de verrouillage.

11. Système de serrage (10) selon l'une des revendications précédentes, dans lequel l'au moins un actionneur (28) est réalisé comme au moins un boulon d'actionnement (30) ou comme au moins une came d'actionnement (30).

12. Système de serrage (10) selon l'une des revendications précédentes, dans lequel l'au moins un actionneur (28) est disposé sur ou dans une bague de réglage (26).

13. Système de serrage (10) selon la revendication 9, dans lequel, dans la position neutre, l'au moins un actionneur (28) pousse l'au moins un coulisseau de serrage (22) dans la position de libération et/ou, dans la position d'actionnement, l'au moins un actionneur (28) pousse l'au moins un coulisseau de serrage (22) dans la position de verrouillage.

14. Système de serrage (10) selon l'une des revendications précédentes, dans lequel des éléments d'étanchéité (23) sont disposés sur le boîtier (12) et/ou sur le coulisseau de serrage (22) pour assurer l'étanchéité du boîtier (12) et/ou du coulisseau de serrage (22).
